# EUROPÄISCHE PATENTANMELDUNG

(11) **EP 1 976 102 A2**
(43) Veröffentlichungstag der Anmeldung: **01.10.2008**
(21) Anmeldenummer: 08102905.0
(22) Anmeldetag: 26.03.2008
(51) Int. Cl.: H02K 21/24

(54) **Elektrische Homopolarmaschine**

(30) Priorität: 26.03.2007 DE 102007014353
(71) Anmelder: ROBERT BOSCH GMBH, 70442 Stuttgart (DE)
(72) Erfinder: Reutlinger, Kurt, 70174, Stuttgart (DE)

(57) **Zusammenfassung**

Die Erfindung betrifft eine Homopolarmaschine (10) mit einem Ständer (11), dessen Eisenkern (14) eine mehrphasige Ständerwicklung (38) trägt, die über Arbeitsluftspalte (25) mit einem mehrpoligen Läufer (12) zusammenwirkt, dessen Nord- und Südpole (22, 23) axial voneinander beabstandet und in Umfangsrichtung zueinander versetzt sind, die von einer ortsfesten Erregerwicklung (19) erregt werden, wobei in den Abständen benachbarten Nord- beziehungsweise Südpole jeweils ein Zusatzmagnet (31) angeordnet ist.

Zur Erzielung einer kompakt bauenden Maschine mit verbessertem Leistungsgewicht ist vorgesehen, die Maschine in an sich bekannter Flachpol-Bauweise am Läufer (12) mit zwei Polscheiben (22, 23) auszubilden, die den Stirnseiten des Eisenkernes (14) mit jeweils einem Arbeitsluftspalt (25) gegenüberliegen und deren elektrisch erregter Magnetfluss (Φe) den Eisenkern (14) in vorgegebener Axialrichtung durchsetzt und dabei die Zusatzmagnete (31) derart zu magnetisieren, dass ihr Magnetfluss (Φp) bei stromloser Erregerwicklung (19) den Eisenkern (14) in entgegen gesetzter Axialrichtung durchsetzt.

## Beschreibung

### Stand der Technik

Die Erfindung betrifft eine elektrische Homopolarmaschine mit einem Ständer, dessen Eisenkern eine mehrphasige Ständerwicklung trägt, die über mindestens einen Arbeitsluftspalt mit einem mehrpoligen Läufer zusammenwirkt, nach der Gattung des Patentanspruchs 1.

Aus der EP 620 634 A1 sind Homopolarmaschinen bekannt, bei denen am Außenumfang des Läufers elektrisch erregte Nord- und Südpole zueinander axial und in Umfangrichtung versetzt angeordnet sind. Der Läufer wird von einem Ständer-Eisenkern umfasst, welcher zwei axial nebeneinander angeordnete Stränge einer Ständerwicklung trägt. In den Lücken der in Umfangsrichtung benachbarten Läuferpole sind jeweils radial magnetisierte Zusatzmagnete zur Verstärkung der Magnetfeldänderungen in der Ständerwicklung angeordnet. Dabei werden die Läuferpole durch eine stationäre Erregerwicklung magnetisch erregt.

Bei derartigen Homopolarmaschinen ist von Nachteil, dass die axial nebeneinander am Ständer-Eisenkern angeordneten beiden Wicklungsstränge eine große axiale Baulänge der Maschine beiwirken. Außerdem muss der Magnetfluss der Zusatzmagnete sowie der elektrisch erregte Magnetfluss im Läufer über einen Polkern für den magnetischen Rückschluss geführt werden. Dadurch wird der Durchmesser des Läufers zur Vermeidung von magnetischen Engpässen vergrößert, was einen entsprechend größeren Außendurchmesser der Maschine zur Folge hat.

### Offenbarung der Erfindung

Mit der vorliegenden Lösung wird angestrebt, bei gleicher Leistung der Homopolarmaschine die Baugröße zu verringern und damit das Leistungsgewicht der Maschine zu verbessern.

Bei Homopolarmaschinen mit den kennzeichnenden Merkmalen des Anspruchs 1 ergibt sich der Vorteil, dass durch die Flachpol-Bauweise die axiale Baulänge der Maschine deutlich verringert wird und dass zugleich durch die axial magnetisierten Zusatzmagnete der magnetische Rückschluss des elektrisch erregten Magnetflusses nahezu vollständig aus dem Polkern des Läufers verdrängt werden kann.

Homopolarmaschinen in Flachpol-Bauweise mit zwei axialen Luftspalten und geringer axialer Baulänge sind zwar an sich bekannt (siehe DE-OS 16 13 576). Bei diesen Maschinen werden jedoch die Spulen der Ständerwicklung nur von einem variablen Gleichfeld durchsetzt. Außerdem verläuft dort der magnetische Rückschluss des gesamten elektrisch erregten Magnetflusses über den Polkern des Läufers, was wiederum den Läuferdurchmesser in nachteiliger Weise beeinflusst. Dem gegenüber hat die erfindungsgemäße Lösung der Flachpol-Bauweise mit den Zusatzmagneten den Vorteil eines leistungsstarken magnetischen Wechselfeldes entlang dem Umfang der beiden Arbeitsluftspalte zur Erzielung einer höheren Leistung; und dies weitgehend unabhängig von der Spulenanordnung der Ständerwicklung. Neben der verkürzten axialen Baulänge ergeben sich als weiterer Vorteil gegenüber dem Stand der Technik ein kleinerer Außendurchmesser der Maschine sowie ein geringeres Gewicht bei gleicher Leistung. Schließlich lassen sich derartige Homopolarmaschinen in kostengünstiger Ausführung als Großserien herstellen.

Durch die in den Unteransprüchen aufgeführten Maßnahmen ergeben sich vorteilhafte Ausgestaltungen und Weiterbildungen der im Hauptanspruch angegebenen Merkmale.

Zur Erzielung einer hohen Festigkeit der beiden Polscheiben an den Stirnseiten des Ständer-Eisenkernes wird vorgeschlagen, die Polscheiben mit den Nordbeziehungsweise Südpolen jeweils aus einem weichmagnetischen Material, vorzugsweise als Stahlscheibe auszubilden, welche axiale, zum Eisenkern hin offene Aussparungen in Form von Taschen aufweisen, in die jeweils ein Zusatzmagnet eingesetzt ist. Um möglichst einfach herzustellende Bauteile verwenden zu können, wird alternativ dazu vorgeschlagen, die Polscheiben mit den Nord- beziehungsweise Südpolen jeweils von einer Schale aus weichmagnetischem Material, vorzugsweise aus Stahl einzufassen, deren umlaufender Rand die Zusatzmagnete radial hält. Für eine optimale Flussverteilung wird ferner vorgeschlagen, die Zusatzmagnete als Ringsegmente zwischen den benachbarten Polen einer Polscheibe einzusetzen und am Boden der Schale beziehungsweise der Aussparung zu befestigen. Zur Reduzierung des Geräuschpegels sowie für ein möglichst starkes Magnetfeld im axialen Arbeitsluftspalt ist es ferner zweckmäßig, wenn die Zusatzmagnete den Raum zwischen den benachbarten Polen weitgehend ausfüllen und dass die dem Eisenkern des Ständers zugewandte Stirnfläche der Zusatzmagnete in der gleichen Querschnittsebene wie die der benachbarten Pole liegt. Um einen möglichst kleinen Außendurchmesser der beiden Polscheiben zu erreichen, wird vorgeschlagen, die Polscheiben auf einem Läuferkern, vorzugsweise auf einer Läuferwelle mit geringen Querschnitt zu befestigen, der lediglich für den Rückschluss des Magnetflusses der Zusatzmagnete bei stromloser Erregerspule dimensioniert ist.

Aufgrund der Zusatzmagnete in den beiden Polscheiben des Läufers ist es möglich, bei den verschiedensten Varianten in der Anordnung der Ständerwicklung am Eisenkern des Ständers das volle Wechselfeld in den beiden axialen Arbeitsluftspalten auszunutzen. In zweckmäßiger Weise wird dabei der Eisenkern des Ständers mit einer mehrphasigen, vorzugsweise sechsphasigen Ständerwicklung versehen, deren Spulen in die an den beiden Stirnseiten angeordneten, radial ausgerichteten Nuten eingesetzt sind. In vorteilhafter Weise besteht dabei die Ständerwicklung aus vorgefertigten Spulen, deren Längsseiten in zwei Nuten auf einer Stirnseite des Eisenkerns eingesetzt sind. Dadurch erhält man auf jeder Stirnseite des Eisenkerns eine Mehrphasenwicklung und beide Wicklungsseiten können getrennt voneinander auf jeweils eigene Gleichrichter-Brücken geschaltet werden.

In Weiterbildung der Erfindung ist es nunmehr auch möglich, ohne Leistungseinbuße die jeweils sich an den Stirnseiten des Eisenkernes gegenüberliegenden beiden Spulen zu einer größeren Spule zu vereinen. Hierzu wird vorgeschlagen, dass die vorgefertigten Spulen der Ständerwicklung mit ihren Längsseiten in die Nuten auf der einen Stirnseite des Eisenkernes eingesetzt, um den Eisenkern herumgeführt und dort in die Nuten auf der anderen Stirnseite eingesetzt sind. Bei dieser Ausführung bilden dann die Schmalseiten der Spulen jeweils Wickelköpfe am Außen- oder Innenumfang des Eisenkernes. Die einzelnen Phasen der Ständerwicklung werden im Generatorbetrieb der Maschine zweckmäßigerweise über jeweils eine Gleichrichter-Brücke, vorzugsweise in einer zweifachen Stern- beziehungsweise Dreieck-Schaltung auf einen Gleichspannung führenden Ausgang geschaltet.

### Kurze Beschreibung der Zeichnung

Die Erfindung wird im Folgenden beispielhaft anhand der Figuren näher erläutert. Es zeigen:
Figur 1 eine erfindungsgemäße Homopolarmaschine teilweise im Querschnitt,
Figur 2 zeigt den Eisenkern des Ständers in der Draufsicht,
Figur 3 zeigt den Eisenkern teilweise im Querschnitt, nach Linie III-III aus Figur 2 und
Figur 4 zeigt den Abschnitt eines Blechstreifens zum Wickeln des Eisenkerns.
Figur 5 zeigt die rechte Polscheibe der Maschine mit den Zusatzmagneten und
Figur 6 die gleiche Polscheibe im Längsschnitt.
Figur 7 zeigt die linke Polscheibe der Maschine im Längsschnitt und
Figur 8 die gleiche Polscheibe in der Draufsicht.
Figuren 9 bis 12 zeigen Abwicklungen des Ständer-Eisenkerns mit zwei Polscheiben in der Flachpol-Bauweise mit den Flussverläufen bei verschiedenen Betriebszuständen der Maschine.
Figuren 13 bis 16 zeigen von einer geänderten Ausführungsform der Polscheiben jeweils die obere Hälfte in der Vorderansicht und im Längsschnitt.
Figuren 17 bis 19 zeigen verschiedene Anordnungen von Spulen der Ständerwicklung im Querschnitt des Eisenkernes,
Figur 20 zeigt eine Abwicklung des Eisenkernes mit mehrphasiger Ständerwicklung an beiden Stirnseiten des Eisenkerns,
Figur 21 zeigt eine entsprechende Abwicklung des Eisenkerns mit sechsphasiger Ständerwicklung aus Ringspulen gemäß Figur 1 und
Figur 22 zeigt den Schaltungsaufbau der Maschine mit sechs Phasensträngen der Ständerwicklung.

### Ausführungsformen der Erfindung

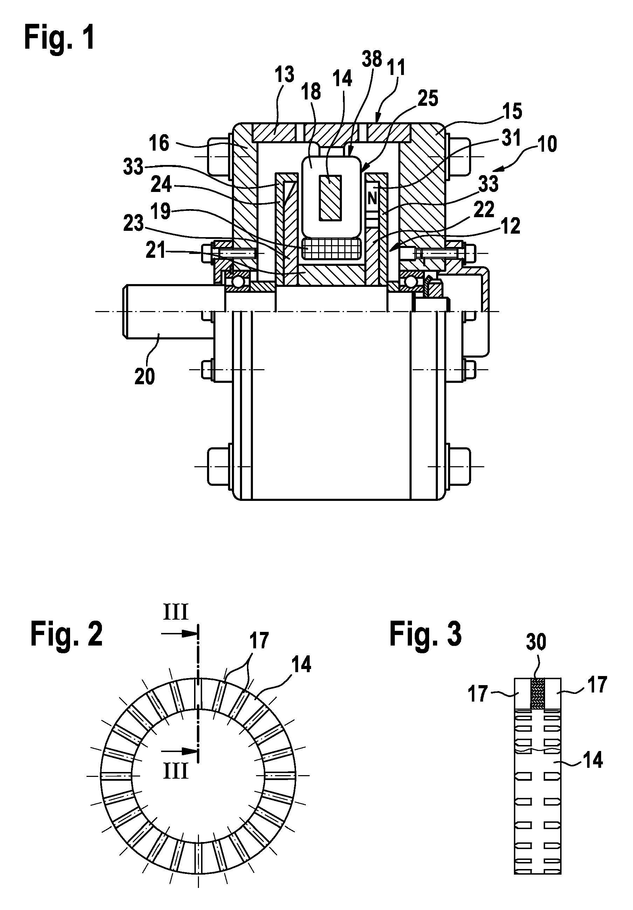

Figur 1 zeigt eine mit 10 bezeichnete Homopolarmaschine in so genannter Flachpol-Bauweise teilweise im Längsschnitt. Solche Maschinen werden unter anderem als Generatoren zur Versorgung eines Bordnetzes in Kraftfahrzeugen eingesetzt. Die Maschine besteht aus einem Ständer 11 und einem Läufer 12. Der Ständer 11 besteht wiederum aus einem Gehäusering 13, der an seiner Innenseite einen ringförmigen Eisenkern 14 trägt und an dessen Stirnseiten je einen Lagerflansch 15, 16 festgeschraubt ist.

Aus Figur 2 und 3 ist erkennbar, dass der ringförmige Eisenkern 14 beidseitig an den Stirnseiten mit radial verlaufenden Nuten 17 versehen ist. In die paarweise einander gegenüberliegenden Nuten 17 ist jeweils eine Ringspule 18 einer mehrphasigen Ständerwicklung 38 eingewickelt. Unterhalb dieser Ringspulen 18 ist konzentrisch zum Eisenkern 14 eine ringförmige Erregerwicklung 19 für den Läufer 12 stationär befestigt. Der Läufer 12 ist mit seiner Läuferwelle 20 in den beiden Lagerflanschen 15 und 16 gelagert und trägt konzentrisch zur stationären Ringspule einen Polkern 21. An den beiden Stirnseiten des Polkerns 21 ist jeweils eine auf der Läuferwelle 20 befestigte Polscheibe 22, 23 angeordnet. Jede Polscheibe 22, 23 hat mehrere über den Umfang gleichmäßig verteilte, radial nach außen gerichtete Polfinger 24, die jeweils einer Stirnseite des Eisenkerns 14 gegenüber liegen. Die Polscheiben 22 und 23 wirken über jeweils einen axialen Arbeitsluftspalt 25 mit dem Eisenkern 14 und seinen Ringspulen 18 zusammen, indem die Polfinger 24 der rechten Polscheibe 22 um eine Polteilung zu den Polfingern 24 der linken Polscheibe 23 in Umfangsrichtung versetzt sind (halbe Polpaarteilung).

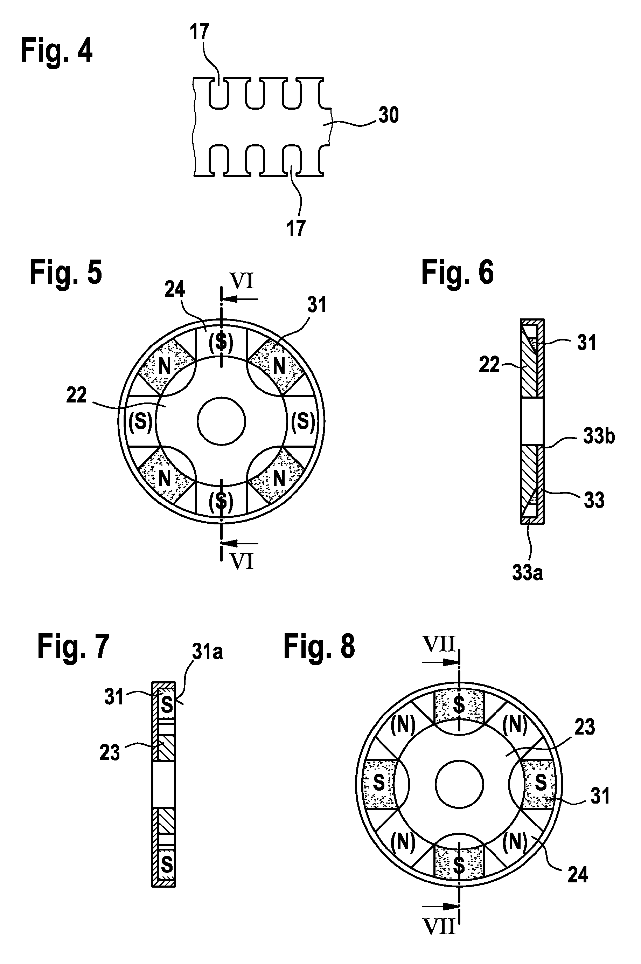

Der ringförmige Eisenkern 14 des Ständers 11 wird aus einem weichmagnetischen Blechstreifen 30 gewickelt, von dem in Figur 4 ein Abschnitt dargestellt ist. In dem Blechstreifen 30 werden zunächst axial ausgerichtete, zu den Längsseiten des Blechstreifens 30 offene Nuten 17 eingestanzt, die sich paarweise gegenüber liegen. Der Blechstreifen 30 wird nun zu einem ringförmigen Eisenkern 14 gewickelt, wobei die Abstände der benachbarten Nuten 17 sich mit zunehmendem Durchmesser entsprechend vergrößern.

An den beiden Polscheiben 21, 23 sind jeweils zwischen den benachbarten Polfingern 24 permanentmagnetische Zusatzmagnete 31, 32 eingesetzt, die in Axialrichtung magnetisiert sind. Die rechte Polscheibe 22 ist dabei in Figur 5 in der Draufsicht und in Figur 6 im Längsschnitt dargestellt. Diese Polscheibe 22 bildet bei elektrischer Erregung an ihren vier Polfingern 24 jeweils einen Südpol aus. Zur Erzielung eines Wechselfeldes im Arbeitsluftspalt 23 sind die Zusatzmagnete 31 nun derart axial magnetisiert, dass ihr Magnetfluss bei stromloser Erregerspule den Eisenkern 14 in entgegen gesetzter Axialrichtung zum elektrisch erregten Magnetfluss durchsetzt. Die Zusatzmagnete 31 liegen mit ihrer dem Eisenkern 14 des Ständers 11 zugewandten Stirnfläche 31 a in der gleichen Querschnittsebene wie die Polflächen der benachbarten Polfinger 24 und bilden dort jeweils einen Nordpol N aus. Die linke Polscheibe 23 ist spiegelbildlich zur rechten Polscheibe 22 ausgebildet und in Figur 8 in der Vorderansicht sowie in Figur 7 im Längsschnitt dargestellt. Ihre Polfinger 24 bilden bei elektrischer Erregung vier Nordpole aus und die zwischen den Polfingern 24 eingesetzten axial magnetisierten Zusatzmagnete 32 bilden am linken Arbeitsluftspalt 25 Südpole aus.

Die Polscheiben 22 und 23 mit ihren Nordpole beziehungsweise Südpole ausbildenden Polfingern 24 sind jeweils von einer Schale 33 aus weichmagnetischen Material, zum Beispiel aus Stahl eingefasst, wobei deren umlaufender Rand 33a die Zusatzmagnete 31 radial hält. Dabei sind die Zusatzmagnete 31 als Ringsegmente zwischen den benachbarten Polfingern 24 eingesetzt und am Boden 33b der Schale 33 zum Beispiel durch eine Klebung befestigt.

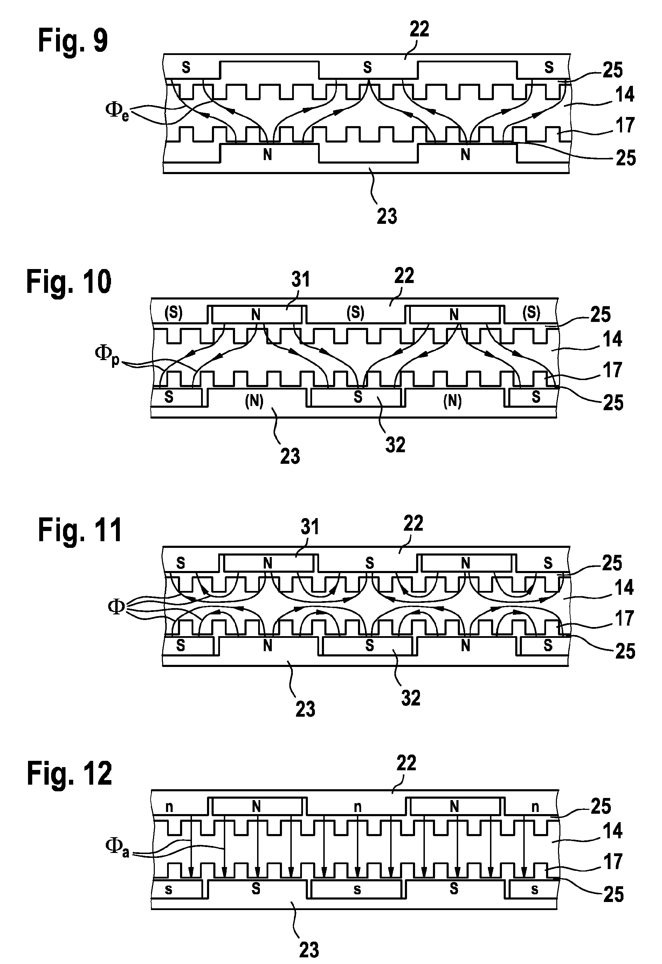

Im Folgenden wird die Wirkungsweise der Homopolarmaschine 10 gemäß Figur 1 näher erläutert, wobei in den Figuren 9 bis 12 für verschiedene Betriebszustände der Maschine der Verlauf des Magnetflusses im Eisenkern 14 des Ständers 11 in jeweils einer Abwicklung mit den stirnseitig dazu angeordneten Polscheiben 22 und 23 schematisch dargestellt wird.

Figur 9 zeigt zunächst den Flussverlauf im Eisenkern 14 bei Verwendung von Polscheiben 22, 23 ohne Zusatzmagnete gemäß dem Stand der Technik nach der DE-OS 16 13 576. Dort tritt der elektrisch erregte, das heißt von der Erregerwicklung 19 erzeugte Magnetfluss Φe an den Nordpolen N der Polscheibe 23 aus, gelangt über den Arbeitsluftspalt 25 in den Eisenkern 14 und verläuft dort teils axial und teils in Umfangsrichtung über den zweiten Arbeitsluftspalt 25 zum nächstliegenden Südpol der gegenüberliegenden Polscheibe 22. Der Rückschluss des gesamten elektrisch erregten Magnetflusses Φe erfolgt hier über den Polkern 21. Im Abstandsbereich zwischen den benachbarten Nord- beziehungsweise Südpolen tritt hier praktisch kein Magnetfluss in den Eisenkern 14 ein beziehungsweise aus ihn heraus. Das bedeutet, dass sich in den Arbeitsluftspalten 25 jeweils ein magnetisches Gleichfeld ausbildet, das in Umfangsrichtung zwischen einem Maximalwert und einem Wert nahe Null schwankt. Dies bedeutet gegenüber einem Wechselfeld eine deutlich geringe Leistungsausbeute. Durch die Verwendung von Ringspulen 18 lässt sich zwar bei Maschinen in der Flachpol-Bauweise eine höhere Leistungsausbeute durch die dann auftretenden Magnetfluss-Richtungsänderungen erzielen. Jedoch ist der jeweils mit den Ringspulen 18 verkettete maximale Magnetfluss dann deutlich geringer als bei einer stirnseitigen Anordnung der Spulen.

Eine deutliche verbesserte Leistungsausbeute ergibt sich nun bei Homopolarmaschinen in der Flachpol-Bauweise durch die erfindungsgemäße Verwendung von Zusatzmagneten 31 zwischen den benachbarten Polen der Polscheiben 22 und 23 gemäß Figur 5 und 8. In Figur 10 ist in schematischer Darstellung der Flussverlauf im Eisenkern 14 dargestellt, der von den Zusatzmagneten 31, 32 erzeugt wird. Dieser permanent magnetische Fluss Φp tritt an den Stirnseiten der als Nordpole axial magnetisierten Zusatzmagnete 31 aus und gelangt über den Arbeitsluftspalt 25 zum Eisenkern 14 der Maschine. Von dort tritt er teils in Axialrichtung und teils in Umfangsrichtung durch den Eisenkern hindurch zur gegenüberliegenden Stirnseite und gelangt von dort über den zweiten Arbeitsluftspalt 25 jeweils zur Stirnseite eines als Südpol axial magnetisierten Zusatzmagneten 32 an der Polscheibe 23. Der magnetische Rückschluss erfolgt hier wiederum über den Polkern 21 der Läuferwelle 20.

Bei voller elektrischer Erregung des Läufers 12 über die Erregerwicklung 19 wird nun dieser in Figur 10 dargestellte permanent magnetische Fluss Φp überlagert mit dem elektrisch erregten Magnetfluss Φe aus Figur 9. Dadurch ergibt sich nunmehr im Eisenkern 14 der in Figur 11 dargestellte Flussverlauf, bei dem nicht nur der Magnetfluss Φ im Eisenkern 14 deutlich verstärkt wird, sondern außerdem auch noch in den beiden Arbeitsluftspalten 25 in Umfangsrichtung jeweils ein Wechselfeld erzeugt wird. Dadurch ergibt sich nahezu unabhängig von der Anordnung der Spulen am Eisenkern 14 im Generatorbetrieb der Maschine eine deutlich höhere Flussverkettung und Flussänderung bei einem umlaufenden Läufer.

Bei dieser Maschine ergibt sich als weiterer Vorteil, dass sie im Generatorbetrieb auch bei stromloser Erregerwicklung eine von den Zusatzmagneten 31 in den Spulen der Ständerwicklung eine EMK erzeugt, welche zu einer Abgabeleistung für den Grundbedarf von Kraftfahrzeug-Bordnetzen ausreicht.

Sollte die Leistungsabgabe ohne Erregung dennoch zu groß sein, ist es möglich, sie durch eine Gegenerregung bis auf Null zu reduzieren. In Figur 12 ist für diesen Fall der Flussverlauf im Eisenkern 14 der Maschine dargestellt. Die Erregerwicklung 19 wird hier von einem kleinen Strom in entgegen gesetzter Richtung zur Leistungserregung durchflossen und erzeugt damit an der rechten Polscheibe vier schwache Nordpole n und an der linken Polscheibe 23 vier schwache Südpole s. Der damit erzeugte Magnetfluss von der Polscheibe 22 durchsetzt nun den Eisenkern 14 in Axialrichtung und drängt dabei den Magnetfluss der Zusatzmagnete 31, 32 ebenfalls in eine axiale Richtung durch den Eisenkern 14. Dadurch wird über den gesamten Umfang im Eisenkern 14 ein magnetisches Axialfeld Φa erzeugt, das auch in den beiden Arbeitsluftspalten 25 über den gesamten Umfang nahezu konstant ist. In den mit diesem Gleichfluss verketteten Spulen der Ständerwicklung kann folglich auch keine EMK mehr induziert werden.

Da bei einem elektrisch voll erregten Läufer gemäß Figur 11 der magnetische Rückfluss zwischen den Zusatzmagneten 31 und 32 weitgehend über die Polscheiben 22 und 23 zu dem benachbarten Polfingern 24 verläuft, reduziert sich damit auch der magnetische Rückschluss über den Polkern 21 an der Läuferwelle 20. Dadurch reicht es aus, wenn der Polkern 21 nunmehr lediglich für den Rückschluss des Magnetflusses Φp der permanent magnetischen Zusatzmagnete 31, 32 bei stromloser Erregerwicklung 19 dimensionier wird.

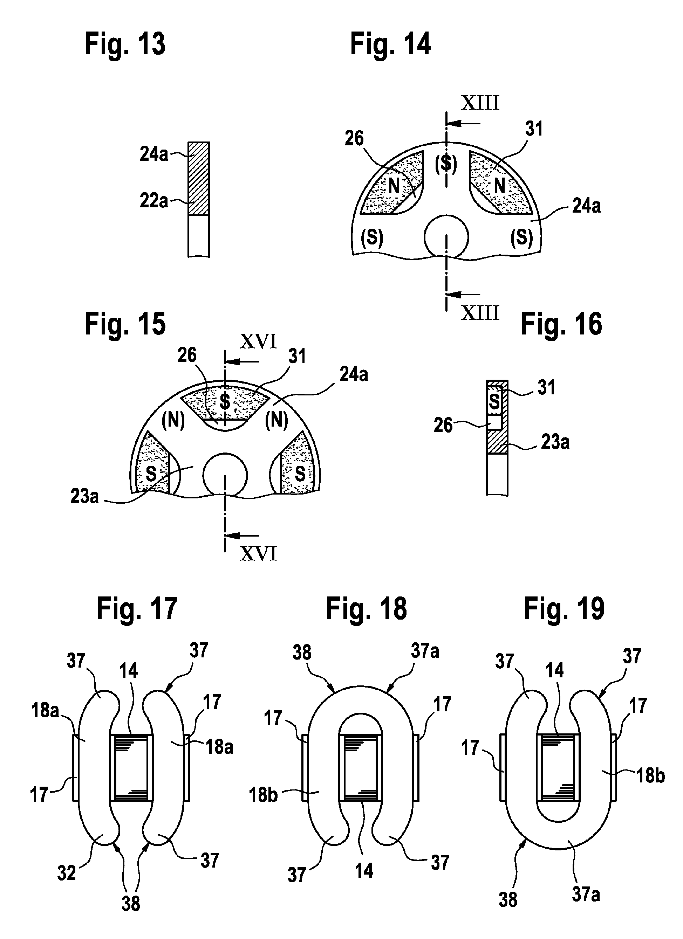

In den Figuren 13 bis 16 sind die Polscheiben 22a und 23a alternativ zu der Ausführung nach den Figuren 5 bis 8 als Stahlscheiben ausgebildet, wobei jeweils zur Hälfte die rechte Polscheibe 22a in Figur 13 im Längsschnitt und in Figur 14 in der Vorderansicht dargestellt ist und in Figur 15 die linke Polscheibe 23a zur Hälfte in der Vorderansicht und in Figur 16 im Längsschnitt dargestellt ist. Dabei ist erkennbar, dass die Polscheiben 22a und 23 a jeweils zwischen ihren Polfingern 24a axiale, zum Eisenkern 14 hin offenen Aussparungen 26 in Form von Taschen aufweisen. In diesen Taschen ist jeweils einer der Zusatzmagnete 31, 32 stirnseitig bündig eingesetzt und befestigt. Die Zusatzmagnete 31, 32 füllen dabei den Raum zwischen den benachbarten Polfingern 24a weitgehend aus.

Bei der Verwendung der Zusatzmagnete 31, 32 in den Polscheiben 22 und 23 der Homopolarmaschine in Flachpol-Bauweise können die Spulen der Ständerwicklung in unterschiedlicher Form ausgebildet sowie in verschiedener Art und Weise in den Nuten 17 des Eisenkerns 14 angeordnet sein. In den Figuren 17 bis 19 werden verschiedene Spulenausführungen dargestellt. Gemäß Figur 17 werden die Spulen einer mehrphasigen Ständerwicklung 38 als Einzelspule 18a zunächst separat hergestellt und sodann in die radial ausgerichteten Nuten 17 an den beiden Stirnseiten des Eisenkerns 14 eingesetzt. Da die beiden Längsseiten der Einzelspulen 18a in Nuten 17 eingesetzt sind, welche voneinander je nach Phasenzahl einen mehr oder weniger großen Abstand haben, werden dementsprechend am Außenumfang und Innenumfang des Eisenkerns 14 mehr oder weniger große Wickelköpfe 37 gebildet, die sich in bekannter Weise mit den Wickelköpfen benachbarter Spulen überlappen.

Figur 18 zeigt eine andere Ausführungsform der separat hergestellten Einzelspulen. Dort werden gegenüber der Ausführungsform nach Figur 17 zunächst nur halb so viele, größere Einzelspulen 18b hergestellt, die dann mit ihren Längsseiten zunächst in die Nuten 17 auf der einen, zum Beispiel rechten Stirnseite des Eisenkerns 14 eingesetzt werden. Die Längsseiten werden sodann außen um den Eisenkern 14 herumgeführt und schließlich auf der anderen Stirnseite in die dort angeordneten Nuten 17 eingesetzt. Hierbei sind lediglich auf der Innenseite des Eisenkerns 14 einander überlappende Wickelköpfe 37 der Einzelspulen 18b angeordnet, während am Außenumfang des Eisenkerns 14 zwischen den einander gegenüberliegenden Nuten 17 axial verlaufende Wickelköpfe 37a ausgebildet werden, die sich mit den Spulen benachbarter Phasen nicht überlappen.

Figur 19 zeigt die gleiche Spulenausbildung. Jedoch sind hier die sich überlappenden Wickelköpfe 37 benachbarter Einzelspulen 18b am Außenumfang des Eisenkerns 14 angeordnet und die axial verlaufenden Wickelköpfe 37a liegen hier am Innenumfang des Eisenkerns 14.

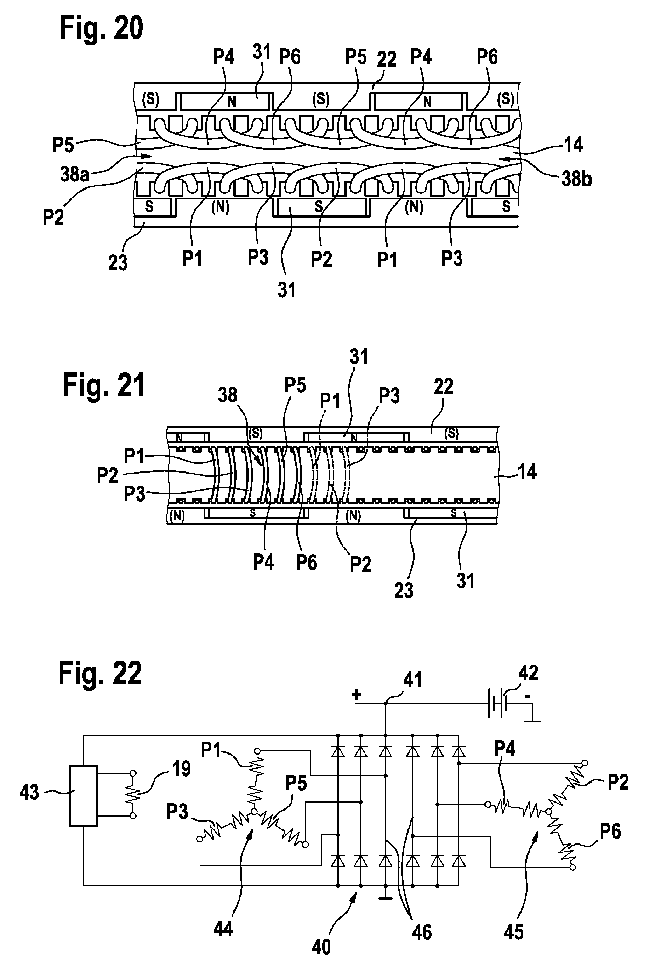

Figur 20 zeigt in schematischer Darstellung die Abwicklung des Eisenkerns 14 mit den Polscheiben 22 und 23 sowie mit einer Anzahl von Einzelspulen 18a, die gemäß Figur 17 in die Nuten 17 auf jeweils einer Stirnseite des Eisenkerns 14 eingesetzt sind. Die Einzelspulen 18a sind hier auf jeder Stirnseite des Eisenkerns 14 zu einer dreiphasigen Ständerwicklung mit den Phasensträngen P1, P2, P3 auf der einen Stirnseite und mit den Phasensträngen P4, P5 und P6 auf der anderen Stirnseite des Eisenkerns 14 angeordnet. Da die sich gemäß Figur 17 gegenüberliegenden Einzelspulen 18a bei sich drehendem Läufer 12 immer von einem magnetischen Wechselfluss gleicher Größe und Richtung durchsetzt werden, haben auch die in den Phasensträngen P1 bis P3 sowie P5 bis P6 induzierten Spannungen ebenfalls immer gleiche Größe und Phasenlage. Sie können daher sowohl voneinander getrennt zu einem Stern oder Dreieck verschaltet und über je einen Brücken-Gleichrichter auf einen Gleichstromausgang geschaltet werden als auch paarweise zueinander in Reihe oder parallel geschaltet werden und dann in einer Dreieck- oder Sternschaltung über drei Gleichrichter-Brücken auf einen Gleichstromausgang geschaltet werden. Der Phasenwinkel beträgt dabei jeweils 120°.

Figur 21 zeigt in Abänderung zu Figur 20 eine sechsphasige Ständerwicklung 38 mit einer Ausbildung und Anordnung der Einzelspulen als Ringspulen 18 gemäß Figur 1. Bei dieser Ausführung ergeben sich sechs Phasenstränge P1 bis P6 mit einem Phasenwinkel von jeweils 30°. In Figur 21 ist nur jeweils eine Einzelspule der sechs Phasenstränge vollständig dargestellt, wogegen weitere Einzelspulen des gleichen Phasenstranges gestrichelt angedeutet sind. Dabei können die Spulen eines Phasenstranges zueinander ganz oder teilweise in Reihe oder parallel geschaltet sein. Da die Spulen 18 von jeweils einem der sechs Phasenstränge P1 bis P6 vor jedem Nordpol oder Südpol in jeweils nur einer Nut 17 eingesetzt ist, spricht man hier von einer Ganzlochwicklung mit einer Lochzahl q=1. Die Lochzahl ist somit die Anzahl der Nuten pro Pol und Strang. Bei so genannten Ganzlochwicklungen sind ebenso gut Lochzahlen q von 2, von 3 oder mehr möglich. Bei entsprechender Nutteilung können im Eisenkern 14 aber ebenso gut so genannte Bruchlochwicklungen mit einer Lochzahl q von kleiner 1, von größer 1, aber kleiner 2 und so weiter verwendet werden.

Figur 22 zeigt eine der verschiedenen Verschaltungsmöglichkeiten der Homopolarmaschine 10 mit einer sechsphasigen Ständerwicklung 38 gemäß Figur 21. Die Maschine arbeitet hier im Generatorbetrieb zur Versorgung eines Kraftfahrzeug-Bordnetzes, in dem der Ausgang einer Gleichrichter-Brückenschaltung 40 einerseits auf Masse und andererseits über eine Plusklemme 41 an dem Pluspol einer Akkumulatorbatterie 42 des Kraftfahrzeugs angeschlossen ist. In vereinfachter Darstellung ist hier die Erregerwicklung 19 der Maschine über einen Regler 43 an die Plusklemme 41 sowie an Masse angeschlossen. Mit diesem Regler 43 lassen sich in Abhängigkeit von der Bordnetzspannung Richtung und Stärke des Erregerstromes derart regeln, dass sich die in den Figuren 10 bis 12 dargestellten, verschiedenen magnetischen Durchflutungen realisieren lassen. Hierbei sind die drei Phasenstränge P1, P3 und P5 zu einer ersten Sternschaltung 44 zusammen geschaltet, deren drei Phasen um jeweils 120° zueinander versetzt sind. In gleicher Weise sind die Phasenstränge P2, P4 und P6 zu einer zweiten Sternschaltung 45 verschaltet, deren Phasen ebenfalls zueinander um 120° und zu den Phasen der ersten Sternschaltung 44 um jeweils 30° versetzt sind. Alle sechs Phasenstränge P1 bis P6 sind jeweils über eine Gleichrichterbrücke 46 auf den Gleichspannung führenden Ausgang zwischen Masse und Plusklemme 41 geschaltet. Die Gleichrichter-Brücken 46 sind dabei in bekannter Weise zueinander parallel geschaltet, so dass an der Plusklemme 41 im Generatorbetrieb eine leicht pulsierende Gleichspannung auftritt, die aufgrund der um 30° zueinander versetzten Phasen eine entsprechend geringere Welligkeit aufweist.

Die Erfindung ist nicht auf die dargestellten und beschriebenen Ausführungsbeispiele beschränkt, zumal derartige Homopolarmaschinen bei entsprechender Bestromung der Ständerwicklung 38, zum Beispiel mittels Umrichter, auch im Motorbetrieb arbeiten können. Ferner ist es möglich, die Erregerwicklung für den Läufer der Maschine vom Innenumfang weg ganz oder teilweise an den Außenumfang des Eisenkerns 14 im Ständer 11 zu verlegen und dabei gegebenenfalls den Gehäusering 13 als Magnetjoch für den magnetischen Rückschluss zu verwenden. Ferner ist es möglich, die Erregerwicklung 19 auf der Läuferwelle 20 zu befestigen und über Schleifringe und Bürsten mit Erregerstrom zu versorgen. Im Hinblick auf die dargestellte achtpolige Läuferausführung mit vier Polfingern und Zusatzmagneten je Polscheibe 22 und 23 ist auch jede beliebige andere Polzahl realisierbar. Auch die Phasenzahl der Maschine ist frei wählbar. Da jedoch mit einer höheren Phasenzahl auch der Verschaltungsaufwand zunimmt, sollte zweckmäßigerweise die Phasenzahl zwischen 3 und 7 begrenzt bleiben. Da die Homopolarmaschine als Synchronmaschine arbeitet, und aufgrund ihres nunmehr axialen Wechselfeldes in den Arbeitsluftspalten ein deutlich verbessertes Leistungsgewicht aufweist, kann sie auch überall dort Verwendung finden, wo Drehfeld-Synchronmaschinen als Motor oder Generator eingesetzt werden.

## Patentansprüche

1. Elektrische Homopolarmaschine (10) mit einem Ständer (11), dessen vorzugsweise als Blechpaket hergestellter Eisenkern (14) eine mehrphasige Ständerwicklung (38) trägt, die über mindestens einen Arbeitsluftspalt (25) mit einem mehrpoligen Läufer (12) zusammenwirkt, dessen Nord- und Südpole (24) axial voneinander beabstandet und in Umfangsrichtung zueinander versetzt sind, und die aus weichmagnetischem Material bestehen sowie von einer mit Gleichstrom zu versorgenden, feststehenden Erregerwicklung (19) erregt werden, wobei mehrere Nord- und Südpole jeweils in Umfangsrichtung voneinander einen Abstand haben und wobei in den Abständen jeweils ein Zusatzmagnet (31, 32) mit einer zu den benachbarten Polen entgegen gesetzten Polarität angeordnet ist, **dadurch gekennzeichnet, dass** die Nord- beziehungsweise Südpole (24) des Läufers (12) in an sich bekannter Flachpol-Bauweise als Polscheiben (22, 23) ausgebildet sind und den mit Nuten (17) versehenen Stirnseiten des Eisenkerns (14) mit jeweils einem axialen Arbeitsluftspalt (25) gegenüberliegen, so dass der von der Erregerwicklung (19) erzeugte Magnetfluss (Φe) den Eisenkern (14) in einer vorgegebenen Axialrichtung durchsetzt und dass die Zusatzmagnete (31) derart axial magnetisiert sind, dass ihr Magnetfluss (Φp) bei stromloser Erregerwicklung (19) den Eisenkern (14) in entgegen gesetzter Axialrichtung durchsetzt.

2. Homopolarmaschine nach Anspruch 1, **dadurch gekennzeichnet, dass** die Polscheiben (22, 23) mit den Nord- beziehungsweise Südpolen (24) jeweils aus weichmagnetischem Material, vorzugsweise als Stahlscheibe ausgebildet sind, welche axiale, zum Eisenkern (14) hin offenen Aussparungen (36) in Form von Taschen aufweisen, in die jeweils ein Zusatzmagnet (31) eingesetzt ist.

3. Homopolarmaschine nach Anspruch 1, **dadurch gekennzeichnet, dass** die Polscheiben (22, 23) mit als Polfinger ausgebildeten Nord- beziehungsweise Südpolen (24) jeweils von einer Schale (33) aus weichmagnetischen Material, vorzugsweise aus Stahl eingefasst sind, deren umlaufender Rand (3 3 a) die Zusatzmagnete (31) radial hält.

4. Homopolarmaschine nach einem der vorherigen Ansprüche, **dadurch gekennzeichnet, dass** die Zusatzmagnete (31) als Ringsegmente zwischen den benachbarten Polen (24) eingesetzt sind und den Raum zwischen den benachbarten Polen (24) weitgehend ausfüllen.

5. Homopolarmaschine nach einem der vorherigen Ansprüche, **dadurch gekennzeichnet, dass** die dem Eisenkern (14) des Ständers (11) zugewandte Stirnfläche (31a) der Zusatzmagnete (31) in der gleichen Querschnittsebene wie die der benachbarten Pole (24) liegt.

6. Homopolarmaschine nach einem der vorherigen Ansprüche, **dadurch gekennzeichnet, dass** die Polscheiben (22, 23) an einem Polkern (21), vorzugsweise auf einer Läuferwelle (20) befestigt sind, wobei der Polkern (21) lediglich für den Rückschluss des Magnetfluss (Φp) der Zusatzmagnete (31) bei stromloser Erregerwicklung (19) dimensioniert ist.

7. Homopolarmaschine nach einem der vorherigen Ansprüche, **dadurch gekennzeichnet, dass** der Eisenkern (14) des Ständers (11) mit einer mehrphasigen, vorzugsweise sechsphasigen Ständerwicklung (38) versehen ist, deren Spulen (18) in die an den beiden Stirnseiten des Eisenkerns (14) angeordneten, radial ausgerichteten Nuten (17) eingesetzt sind.

8. Homopolarmaschine nach Anspruch 7, **dadurch gekennzeichnet, dass** die Ständerwicklung (38) aus vorgefertigten Einzelspulen (18a) besteht, deren Längsseiten in zwei Nuten (17) auf einer Stirnseite (14a, 14b) des Eisenkerns (14) eingesetzt sind.

9. Homopolarmaschine nach Anspruch 7, **dadurch gekennzeichnet, dass** die Ständerwicklung (38a, 3 8b) aus vorgefertigten Einzelspulen (18b) besteht, deren Längsseiten in die Nuten (17) auf der einen Stirnseite (14a) des Eisenkerns (14) eingesetzt, um den Eisenkern (14) herumgeführt und dort in die Nuten (17) auf der anderen Stirnseite (14b) eingesetzt sind.

10. Homopolarmaschine nach Anspruch 9, **dadurch gekennzeichnet, dass** die Schmalseiten der Einzelspulen (18b) jeweils Wickelköpfe (37) am Außen- oder Innenumfang des Eisenkerns (14) bilden.

11. Als Generator arbeitende Homopolarmaschine nach einem der vorherigen Ansprüche, **dadurch gekennzeichnet, dass** die einzelnen Phasenstränge (P1 bis P6) der Ständerwicklung (38) über jeweils eine Gleichrichter-Brücke (46), vorzugsweise in einer zweifachen Stern- beziehungsweise Dreieck-Schaltung auf einen Gleichspannung führenden Ausgang (41) geschaltet sind.
